# EUROPÄISCHE PATENTSCHRIFT

(11) **EP 0 701 662 B1**
(45) Veröffentlichungstag und Bekanntmachung des Hinweises auf die Patenterteilung: **17.09.1997**
(21) Anmeldenummer: 94919607.5
(22) Anmeldetag: 03.06.1994
(51) Int. Cl.: F04C 29/00, G05D 13/62

(54) **VERDRÄNGERMASCHINE MIT ELEKTRONISCHER MOTORSYNCHRONISATION**
POSITIVE DISPLACEMENT MACHINE WITH ELECTRONIC MOTOR SYNCHRONISATION
MACHINES VOLUMETRIQUES A SYNCHRONISATION ELECTRONIQUE DU MOTEUR

(30) Priorität: 04.06.1993 DE 4318707
(43) Veröffentlichungstag der Anmeldung: 20.03.1996
(73) Patentinhaber: SIHI GmbH & Co KG, D-25509 Itzehoe (DE)
(72) Erfinder: STEFFENS, Ralf, D-25551 Lohbarbek (DE); SALMEN, Andreas, D-25524 Itzehoe (DE)
(74) Vertreter: Glawe, Delfs, Moll & Partner
(86) Internationale Anmeldenummer: EP9401818
(87) Internationale Veröffentlichungsnummer: WO9429596

(56) Entgegenhaltungen:
- EP-A- 0 472 933
- EP-A- 0 502 459
- EP-A- 0 558 921
- WO-A-91/18206

## Beschreibung

Die Erfindung betrifft eine Verdrängermaschine für kompressible Medien, insbesondere eine trockenlaufende Evakuationspumpe, mit mindestens zwei Rotoren, die als Profilkörper ausgebildet sind und deren Profile bei der Drehung zahnradartig ineinander greifen und die berührungsfrei zueinander laufen, wobei die Rotoren jeweils durch eigene Elektromotoren angetrieben werden.

Bei diesen Verdrängermaschinen handelt es sich stets um Mehrwellenmaschinen. Die auf diesen Wellen angeordneten Rotorprofilkörper laufen in einem Gehäuse, und zwar mit sehr engem Spiel sowohl der Flanken der Profilkörper gegeneinander als auch gegenüber den die Profilkörper umgebenden Gehäusewänden an den Stirnseiten und am Außenumfang. Durch die Rotation der Profilkörper werden dann zwischen den Flanken der einzelnen Rotoren und der Gehäuseinnenwand Räume freigegeben wieder verengt, wobei der Freigabe des Raumes durch entsprechend angeordnete Steuerkanten/Schlitze Fördermedium in diesen Raum einströmen kann und bei der Verengung des Raumes durch entsprechende andere Steuerkanten/Schlitze das verdichtete Medium wieder austritt.

Um die Förderfunktion optimal erfüllen zu können, d.h. hohen Wirkungsgrad und Betriebssicherheit zu erzielen, sind einmal die oben erwähnten engen Spiele zwischen den Profilkörperflanken gegeneinander und gegenüber den Gehäusewandungen notwendig, da durch die sich ergebenden Spalte die Räume unterschiedlichen Druckes innerhalb der Pumpe gegeneinander abgedichtet werden und Verlustströme durch diese Spalte direkt den Wirkungsgrad der Pumpe beeinflussen. Zum anderen müssen die Rotoren gegeneinander trotz sehr geringen Spieles aber dennoch berührungsfrei laufen, d.h. sie müssen zu jedem Zeitpunkt in einem genau definierten Drehzahlverhältnis und einer exakt festgelegten Winkellage bzw. Winkelposition zueinander rotieren.

Eine Möglichkeit, diese Synchronisation sicherzustellen, ist der Einsatz von Zahnrädern. Diese sind parallel zu den Verdrängerköpfen fest auf den Rotorwellen angeordnet und in seitlich liegenden Getriebekästen untergebracht. Dabei werden an die Genauigkeit der Zahnräder und an das Verdrehflankenspiel sehr hohe Anforderungen gestellt, um den oben beschriebenen genauen Lauf der Rotoren zueinander zu gewährleisten. Das gleiche gilt für die Fixierung der Zahnräder im Hinblick auf die Stellung der Profile der Rotoren, d.h. um diese Synchronisation der verschiedenen Rotoren zu erreichen, muß ein sehr hoher Aufwand an Fertigungs- und Montagegenauigkeit betrieben werden. Weitere Nachteile dieser bekannten Lösung liegen in dem relativ hohen Bauvolumen und Gewicht, sowie in der notwendigen Abdichtung zwischen Getriebekästen und Pumpenförderraum, da die Zahnräder natürlich mit entsprechender Ölschmierung laufen müssen und kein Öl bzw. Ölnebel in das Fördermedium gelangen darf. Insbesondere bei Vakuumverdrängermaschinen ist der Mehraufwand durch die erforderliche Abdichtung zwischen dem ölgeschmierten Zahnrad-Synchronisationsgetriebe und dem wünschenswerterweise ölfreien Förderraum wegen der geringen Absolutdrücke und der gleichzeitig hohen Druckverhältnisse sehr aufwendig und nie vollkommen zufriedenstellend lösbar, weil die Wellenabdichtungen entweder eine merkliche Leckage aufweisen oder einem recht hohen Verschleiß unterliegen.

Naturgemäß ergeben sich durch das hohe Bauvolumen und das Gewicht dieser Lösung hohe Kosten bei der Anschaffung bzw. auch bei der Montage und Demontage - also bei Reparatur - einer solchen Pumpe.

Um die genannten Nachteile zu vermeiden, können die einzelnen Rotoren jeweils durch eigene Elektromotoren angetrieben werden und diese durch elektronische Regelungs- und/oder Steuerungseinheiten entsprechend dem Übersetzungsverhältnis der Verdrängerstufe synchron in Winkelposition und Drehzahl gesteuert und/oder geregelt werden. Durch die elektronische Messung der einzelnen Rotorstellungen und dem Vergleich der Drehzahl- und der Winkelposition und Korrektur der Daten, zumindest eines oder ggf. beider Motoren, lassen sich zu jedem Zeitpunkt genau definierte Winkel-Relativlagen und Absolutpositionen der Rotoren zueinander einhalten. Voraussetzung dabei ist natürlich die Einhaltung einer maximal zulässigen Winkeldifferenz. Es ist leicht einzusehen, daß bei einer solchen elektronischen Steuerung und/oder Regelung der gesamte Aufwand zur mechanischen Synchronisation entfallen kann. Es kommen zwar an zusätzlichem Aufwand mindestens ein Elektromotor sowie die elektronischen Regelungs- und/oder Steuerungseinheiten hinzu, jedoch ist der Gesamtaufwand an der Pumpe insgesamt deutlich geringer als bei der bekannten mechanischen Steuerung. Die Leistungen der bei der erfindungsgemäßen Regelung und/oder Steuerung verwendeten Motoren können dann natürlich im einzelnen entsprechend geringer sein als die Motorleistung nur eines einzigen Motors bei herkömmlicher mechanischer Steuerung. Außerdem sind die Regelungs- und/oder Steuerungseinheiten sowie auch die Motoren weniger verschleißanfällig, geräuschärmer und zuverlässiger als die konventionellen Zahnradgetriebe.

Aus "Patents Abstracts of Japan", M-838, 15. Juni 1989, Vol. 13/Nr. 258, ist ein Schraubenverdichter mit zwei Schraubenrotoren bekannt, wobei die Rotoren über einzelne Motoren angetrieben und elektronisch synchronisiert werden. Dazu werden die Drehphasen und die Drehzahlen der Motoren aufgenommen und ggf. aneinander angepaßt.

Die WO 91/18206 zeigt eine zweiwellige Verdrängermaschine, bei der über ein Resolver-Meßsystem die Winkelpositionen und die Geschwindigkeiten der Rotoren ermittelt werden, um die Rotoren mit einem externen Regelgerät zu synchronisieren.

Diese beiden bekannten Systeme sind zwar vorteilhaft, da sie kein Synchronisationsgetriebe verwenden, andererseits müssen bedingt durch die Bauart der Vorrichtung und der Sensoren relativ große Toleranzen zugelassen werden (bei der Vorrichtung gemäß WO 91/18206 sind das beispielsweise ± 4°), so daß die Vorrichtungen lediglich zum Fördern von Flüssigkeiten geeignet sind.

Demgegenüber besteht jedoch der Bedarf nach sog. "trockenlaufenden" Vakuumpumpen. Dabei bezieht sich die Bezeichnung "trockenlaufend" auf den völligen Verzicht auf Öl in der gesamten Vorrichtung, also neben der Ölfreiheit im Schöpfraum auch der Verzicht auf Öl in Seitenräumen zur Schmierung von Wälzlagern, Wellendichtungen, zahnrädern, etc.

Die Erfindung geht aus von einer Verdrängermaschine für kompressible Medien, insbesondere eine trockenlaufende Evakuationspumpe, mit mindestens zwei Rotoren, die als Profilkörper ausgebildet sind und deren Profile bei der Drehung zahnradartig ineinander greifen und die berührungsfrei zueinander laufen, wobei die Rotoren jeweils durch eigene Elektromotoren angetrieben werden, die Motoren durch elektronische Regelungsund/oder Steuerungseinheiten synchron in Winkelposition und Drehzahl gesteuert und/oder geregelt werden, jedem Motor eine eigene Antriebsregeleinheit zugeordnet ist, die unabhängig von den Antriebsregeleinheiten anderer Motoren arbeitet, von einer Hauptsteuervorrichtung den Antriebsregeleinrichtungen Regelsollwerte zugeführt werden, für jeden Motor eine eigene, unabhängige Einzelregelung durchgeführt wird und die Regelung auf zentral vorgegebenen Regelsollwerten basiert und dezentral erfolgt.

Bei einer vorbekannten Verdrängermaschine dieser Art (EP-A-0 502 459) werden die obigen Nachteile wenigstens teilweise vermieden. Es ist dabei eine Drehzahlregelung für mindestens zwei durch separate Motoren angetriebene Rotoren beschrieben, mit der ein berührungsloser Lauf der beiden ineinandergreifenden Rotoren ermöglicht werden soll. Die Vorrichtung benötigt aber immer noch Zahnräder zur Grobsynchronisation, die ineinandergreifen und verhindern sollen, daß sich die Rotoren mit ihren empfindlichen Oberflächen berühren. Die elektronische Regelung ist also offenbar nur unvollkommen. Es ist das Verdienst der Erfindung, erkannt zu haben, daß Schwierigkeiten, bei denen die vorbekannte elektronische Drehzahlregelung nicht ausreicht, nur in Grenzsituationen auftreten.

Die Aufgabe der Erfindung besteht daher in der Schaffung einer Verdrängermaschine der eben genannten Art, bei der selbst ohne Verwendung von ineinandergreifenden Zahnrädern und auch bei kritischen Betriebsbedingungen ein schädliches einander Berühren der Rotoren vermieden werden kann.

Eine Lösung ergibt sich nach Anspruch 1. Erfindungsgemäß wurde erkannt, daß beim Anfahren der Pumpe Schwierigkeiten durch ein teilweises Festsitzen der rotierenden Teile auftreten können. Erfindungsgemäß läßt sich dies durch die Integration eines Anlaufimpuls-Drehmomentgebers in die elektronische Regelungsund/oder Steuerungseinheit beheben. Dabei wird in vorher festlegbaren kurzen Zeitabständen ein in der Stärke vorgebbarer Drehimpuls ggf. mit unterschiedlicher Orientierung wiederholt an die Motoren der Pumpe gegeben, bis sich das festsitzende Rotorteil löst und die Pumpe ordnungsgemäß betrieben werden kann.

Kritische Betriebsbedingungen bzw. deren schädliche Folgen lassen sich auch vermeiden bei einer Verdrängermaschine gemäß Anspruch 3.

In weiterer Ausführung der Erfindung wird vorgeschlagen, die Rotoren aus Werkstoffen herzustellen bzw. die Rotoroberflächen mit Werkstoffen zu beschichten, die gute Notlaufeigenschaften besitzen. Das hat den Vorteil, daß, falls eine Steuerung oder Regelung in der Startphase oder bei Netzausfall nicht oder noch nicht optimal ausgerichtet ist, bei gegenseitiger Berührung die Flanken der Rotoren keinen Schaden nehmen.

Weiter ist es vorteilhaft, den Abstand der gegeneinanderlaufenden Flanken der Rotoren in Bereichen geringer Relativbewegungen geringer auszuführen als in Bereichen höherer Relativbewegungen. Auch das dient, wie die vorher erwähnte Maßnahme, dem Ziel, bei einer evtl. Berührung der Rotorflanken Schaden zu vermeiden oder ihn jedenfalls klein zu halten.

Als kostengünstige Lösung bieten sich als Antriebsmotoren Normmotoren mit normalen Wellenstumpf an.

Für einen leckagefreien Antrieb, bei dem ein Fördermedium-Austritt vermieden werden sollte, lassen sich für den Antrieb der einzelnen Rotoren völlig nach außen gekapselte Einbaumotore verwenden. Eine besonders vorteilhafte Form stellen die bekannten Bausatzspindelmotoren dar.

Als Alternative zu den eben erwähnten Einbaumotoren lassen sich bei beispielsweise aggressiven Medien erfindungsgemäß auch Spaltrohrmotore zum Antrieb der Rotoren einsetzen. Dadurch vermeidet man, daß die Statorwicklungen angegriffen werden, bzw. erspart man sich den vorher aufzubringenden, aufwendigen, notwendigen Korrosionsschutz für die Statorwicklungen.

Um die einwandfreie Funktion der Pumpe von außen überprüfen zu können, wird erfindugsgemäß weiter vorgeschlagen, an die Pumpe Überwachungseinheiten anzuschließen, die Drehzahl, relative Winkelposition, Laufgenauigkeit, Temperaturen, Schlupf- und Drehrichtung messen und diese Daten an ein daran angeschlossenes, von außen zu überwachendes Anzeigegerät weitergeben.

Desweiteren kann man vorteilhafterweise über die vorhandene elektronische Steuerung/Regelung mittels Drehzahlvariation die Pumpenleistung an die jeweilige geforderte Leistung optimal anpassen.

Zum Schutz der Anlage kann vorteilhafterweise in die elektronische Regelungs- und/oder Steuerungseinheit ein überlastschutz für die Motoren und die Pumpe integriert sein, der mit optischer und/oder akustischer Signalgabe eine Vorwarnung gibt und nach einer vorher festlegbaren Zeitspanne automatisch die Anlage abschaltet oder die Drehzahl vermindert. Dadurch lassen sich in der Regel schwerere Schäden an der Anlage vermeiden.

Es ist vorteilhaft, als Regelsollwert einen Lagesollwert für den entsprechenden Rotor zu verwenden, der nach dem Prüfen der Lage des entsprechenden Rotors in einen Drehzahlsollwert umgesetzt wird.

Das erfindungsgemäße Verfahren arbeitet zentral gesteuert mit dezentraler Regelung. Von einer zentral angeordneten Hauptsteuereinheit werden Vorgaben für das Betriebsverhalten der Einzelantriebe gemacht. Die Erzeugung dieser Vorgaben (d.h. die Generierung der Sollwerte für die einzelnen Rotoren) könnte als "Virtueller Rotor" bezeichnet werden. Diese "ideale Maschine" weist keine Abweichungen der vorberechneten Winkellagen auf.

Jede Antriebseinheit folgt mit ihrer eigenen Regelung der Vorgabe durch den entsprechenden Lagesollwert. Dies geschieht in jedem System unabhängig von den anderen parallelen Zweigen, so daß jede Antriebseinheit für sich genommen nur das Ziel hat, die zum virtuellen Rotor passende Winkellage einzunehmen.

Aufgrund dieser Regelungsgestaltung führt die Maschine selbstständig das sog. "Homing" durch. Das bedeuted, daß die Rotoren beim Anlaufen bzw. während des Betriebes automatisch ihre Idealposition einnehmen. Anders als bei getriebesynchronisierten Maschinen, bei denen beim Zusammenbau die Synchronisation einmal eingestellt wird, ist dies erfindungsgemäß nicht erforderlich, da die Maschine selbstsynchronisierend ist und die Synchronisierung fortlaufend einstellt.

Zur Selbstdiagnose können ferner auch Mittel vorgesehen sein, um die Maschine etwas aus den Synchronlauf auszulenken. Es kann dann überprüft werden, wie schnell die Maschine das "Homing" durchführt, und ob die Rotoren in Ausgangsrelativlage zurückkehren oder eine neue, abweichende Relativlage einnehmen.

Da zu jedem Zeitpunkt verhindert werden muß, daß die Rotoren während des Betriebs aneinanderschlagen, reicht es nicht aus, eine einfache Drehzahlregelung zu benutzen. Um die Soll-Lage jederzeit genauestmöglich einhalten zu können, ist in der Antriebsregeleinheit der Drehzahlregelung eine Lageregelung vorgeschaltet.

Dabei ist es vorteilhaft, die Differenz zwischen Lagesollwert und Lageistwert zu erfassen und ein Signal abzugeben, wenn sich die beiden Werte betragsmäßig um einen vorgegebenen Differenzwert unterscheiden. Das Signal kann dazu verwendet werden, die Drehzahl der gesamten Maschine zu vermindern oder die Maschine anzuhalten. In diesen Fällen kann ferner ein akustisches und/oder optisches Signal abgegeben werden. Da die Anforderungen an die Toleranzen mit der Drehzahl steigen, kann der Differenzwert drehzahlabhängig gestaltet sein.
Eine Ausführungsform der Erfindung wird anhand der beigefügten Zeichnungen erläutert.
Fig. 1 zeigt eine Verdrängermaschine mit einer elektronischen Regelung und Steuerung, bei der jeder Motor mit einem eigenen unabhängigen Regelkreis betrieben wird.
Fig. 2 zeigt schematisch den Aufbau einer mehrstufigen Verdrängungsmaschine mit dem zugehörigen Steuer- und Regelsystem,
Fig. 3 zeigt schematisch den Aufbau der Antriebsregeleinheit für einen Motor.

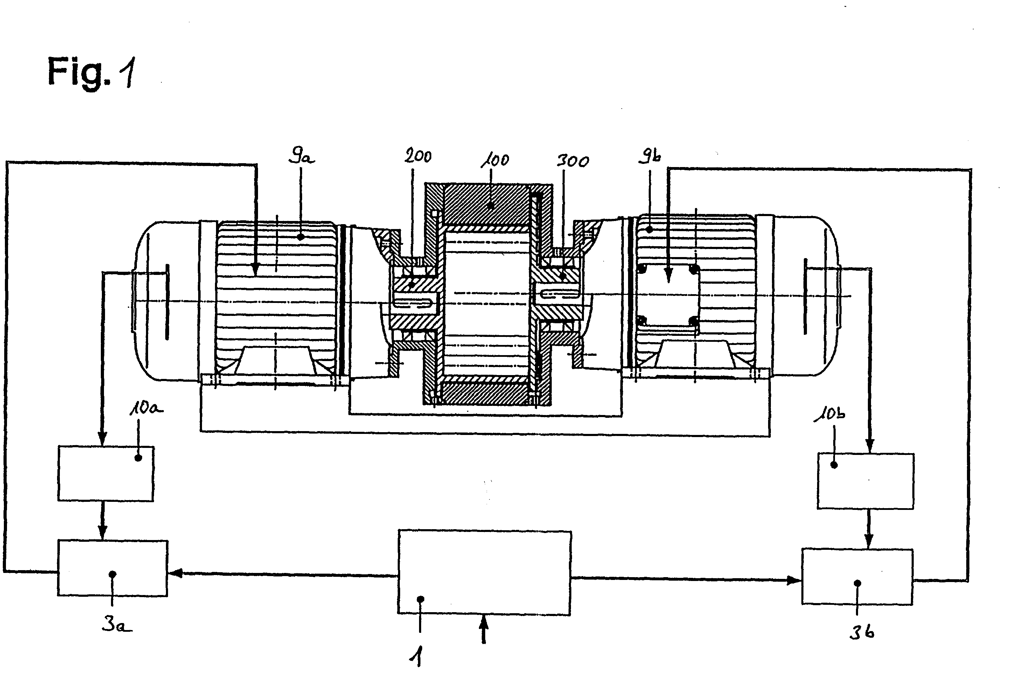

Gemäß Fig. 1 umfaßt die Verdrängermaschine 100 zwei Verdrängerrotoren mit den Rotorwellenansätzen 200 und 300, die jeweils von getrennten Elektromotoren 9a und 9b angetrieben werden. An jedem der Elektromotoren ist an dem freien Wellenende ein Meßsystem installiert, das als Sensor 10a bzw. 10b für jede Motorwelle exakt die momentane Winkelposition mißt und mittels Differenziation nach der Zeit die jeweilige Winkelgeschwindigkeit bestimmt. Diese Werte werden an Antriebregeleinheiten 3a bzw. 3b weitergeleitet. Diese Regelgeräte können beispielsweise von einer Versorgungseinheit oder Hauptsteuereinheit 1, die direkt an die Netzversorgung angeschlossen sein kann, ihre elektrische Energie erhalten. Diese wird entsprechend der Sollwertvorgabe und den von den Meßsystemen 10a und 10b ständig eingehenden Ist-Meßwerten derartig von den Regelgeräten 3a und 3b an die einzelnen Elektromotoren 9a und 9b weitergegeben, daß die geforderte Genauigkeit hinsichtlich Winkelposition und Drehzahl zwischen den Verdrängerrotoren in der Verdrängermaschine ständig eingehalten werden kann. Dabei darf eine Positionsabweichung mit Sicherheit nur maximal wenige Winkelminuten betragen.

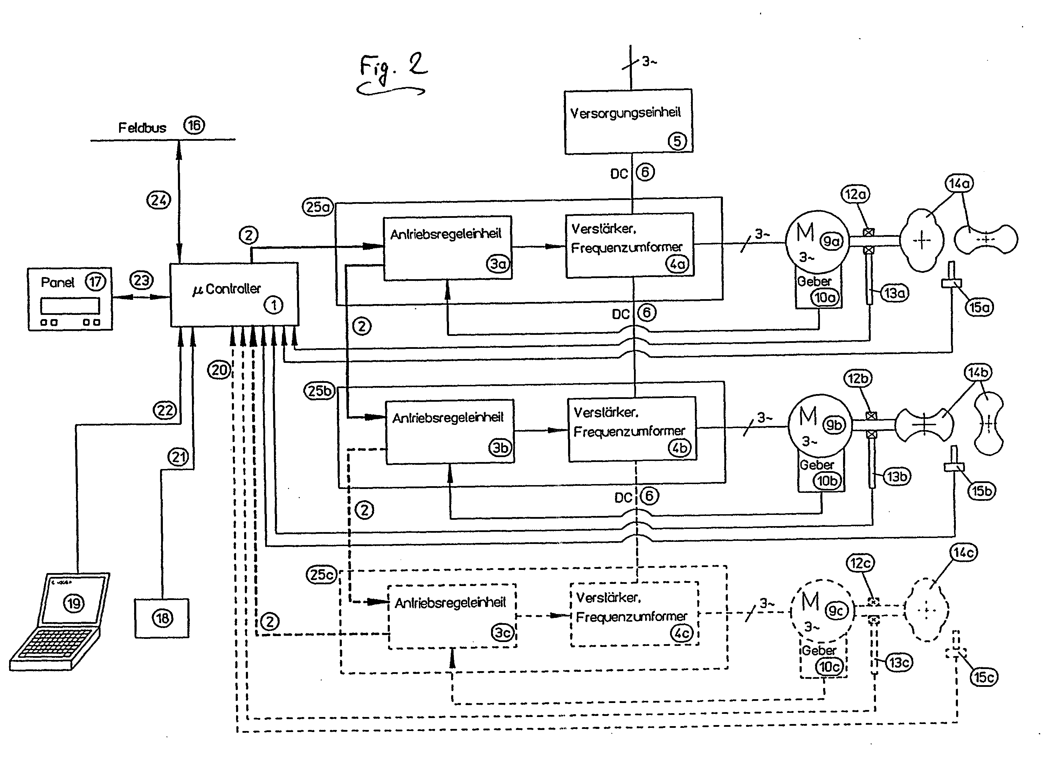

Fig. 2 zeigt den Aufbau eines Steuer- bzw. Regelsystems für eine zwei- bzw. dreistufige Verdrängungsmaschine, wobei die dritte Stufe gestrichelt dargestellt ist.

Über standardisierte Stromschnittstellen 20 werden Meßwerte aus dem Prozeß, beispielsweise mit Sensoren für Druck, verschiedene Temperaturen, 15a-c, Lagerzustand 13a-c, etc., aus der Verdrängereinheit erfaßt. Über eine Schnittstelle, die dem Antrieb zugeordnet ist, können weitere Betriebsdaten wie Motorstrom, Drehzahl und Lagewinkel etc. erfaßt werden.

Zur Drehzahl- und Lagewinkelerfassung wird je nach Anwendungsfall ein optischer, vorzugsweise jedoch ein magnetisch-induktiv arbeitender Inkrementalgeber 10a-c eingesetzt. Mit diesen Sensoren ist eine Genauigkeit im Bereich von Winkel sekunden oder bis zu maximal wenigen Winkelminuten erreichbar. Durch diese hohe Genauigkeit der Sensoren kann die Genauigkeit des Regelsystems soweit gesteigert werden, daß eine trockenlaufende Vakuumpumpe realisierbar ist. Andere Sensorbauarten mit mindestens ähnlichem Auflösungsvermögen sind ebenfalls einsetzbar.

In der dargestellten Ausführungsform dient als Hauptsteuereinrichtung ein Mikrokontroller 1, der über die Schnittstelle 20 die entsprechenden Meßwerte von den Sensoren aufnimmt. Desweiteren erzeugt der Mikrokontroller 1 Lagesollwerte für Antriebsregeleinheiten 3a-c für die einzelnen Motoren 9a-c. Die Erzeugung der einzelnen Lagesollwerte für die Verdrängerrotoren 14a-c kann als Generierung eines "virtuellen Rotors" bezeichnet werden. Dieser virtuelle Rotor führt die Verdrängerrotoren und bestimmt die Drehzahl und die momentane Winkellage aller Rotoren zu jedem Zeitpunkt. Dieser virtuelle Rotor wird per Software im Mikrokontroller 1 generiert.

Der Mikrokontroller 1 bestimmt aus den eingegebenen Meßwerten die optimalen Betriebsbedingungen für die Maschine und führt über den virtuellen Rotor die realen Rotoren.

Gegenüber dem physikalischen Aufbau eines Führungsrotors hat dieses Verfahren den Vorteil, daß Schwingungsvorgänge und Instabilitäten eines technischen Gebildes praktisch nicht auftreten und hohe Synchronität in der Bewegung der Rotoren zueinander gewährleistet ist. Die Einstellung des Synchronlaufes und der konstanten Winkelstellung der Motorrotoren zueinander geschieht zentral geführt und dezentral geregelt. Nach einem Abgleich der Koordinatensysteme der Rotoren untereinander nehmen sie während der Drehung stets eine relative Winkellage ein, die ein Anschlagen der Verdränger 14a-c ausschließt und somit ein mechanisches Getriebe ersetzt.

Für die Übertragung der Sollwerte zu den Rotoren 14a-c wird ein echtzeitfähiges Bussystem verwendet. Mit seiner festen Zykluszeit und der garantierten Antwortzeit aller angeschlossenen Teilnehmer wird ein exakt zeitgesteuertes Verhalten realisiert. Aufgrund des Buskonzeptes mit einer Maximalzahl von Teilnehmern deutlich größer als 3 (eine Hauptsteuereinrichtung und zwei Antriebsregeleinheiten) ist es möglich, die Zahl der Rotoren zu erhöhen und eine mehrstufige Verdrängermaschine aufzubauen. Hier zeigt sich auch ein wesentlicher Vorteil der zentralen Steuerung und der dezentralen Regelung, da auf diese Weise gleichzeitig alle Rotoren geführt werden können; die Rotoren werden unabhängig voneinander geregelt und folgen dem Lagesollwert, so daß Einschwingvorgänge oder eine Destabilisierung des Systems, die auftreten kann, wenn die Lage von Rotoren höherer Stufen abhängig von der Lage eines vorhergehenden Rotors gesteuert werden, vermieden werden können.

Ferner ist ein Gleichstrom - Zwischenkreis 6 vorgesehen, der es bei Wahl einer geeigneten Versorgungseinheit 5 ermöglicht, daß eine frei wählbare Anzahl von Antriebseinheiten angeschlossen werden kann, so daß auch hierdurch ein mehrrotoriger Pumpenaufbau unterstützt wird.
Ein Teil der Meßwerte der Sensoren 10a-c, 12a-c, 15a-c wird im internen Datenspeicher des Mikrocontrollers 1 zu Diagnosezwecken abgelegt. Aus diesen Meßwerten werden Rückschlüsse über den Zustand der Pumpe gezogen, so daß eine ständige Selbstkontrolle durchgeführt werden kann. Bei Erkennung eines möglichen Defektes (beispielsweise Temperaturanstieg, Schaden am Wälzlager 12a-c) kann adäquat reagiert werden.

Den Antriebsregeleinheiten 3a-c sind Frequenzumformer 4a-c nachgeschaltet, und mittels des Mikrocontrollers 1 und den schnellen digitalen Reglern 3a-c kann das Verhalten des Systems optimal an die Erfordernisse des jeweiligen Einsatzprozesses angepaßt werden.

Über eine Schnittstelle 23 (RS 232) kann ein Bedienungspanel 17 angeschlossen werden, um Meßwerte abzufragen oder über eine Tastatur Betriebsdaten zu ändern. Zu Serviceoder Diagnosezwecken kann über eine weitere Schnittstelle 22 bei Bedarf ein Personalcomputer (PC) 19 angeschlossen werden. Zur Fernüberwachung ist eine Feldbusschnittstelle 24 eingerichtet. Neben den Eingriffen, die über das Panel 17 und den PC 19 vorgenommen werden können, werden über die Schnittstelle 24 Daten über den Feldbus 16 an einen Leitstand übergeben.

Über parallel geführte, digital arbeitende Eingabe/Ausgabe-Kanäle können vom Mikrocontroller 1 sowohl binäre Sensorsignale 18 aufgenommen werden und Signale ausgegeben werden. Mit Hilfe dieser Einheit können beispielsweise Sicherheitsschalter überwacht oder Leuchtdioden zur Benutzerinformation angesteuert werden.

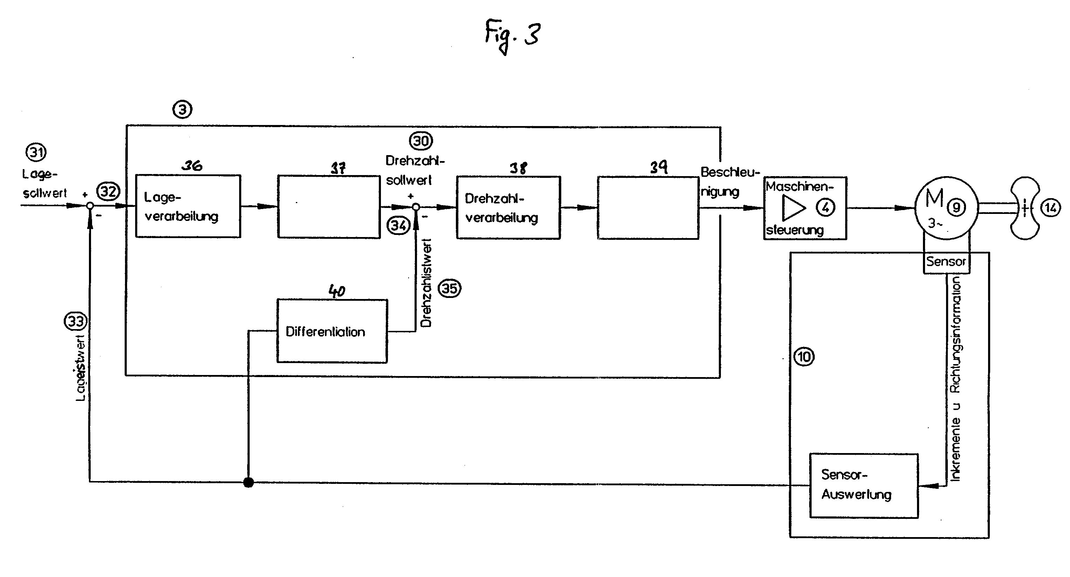

Da alle Antriebsregeleinheiten im wesentlichen gleich aufgebaut sind, ist in Fig. 3 nur eine Antriebsregeleinheit beispielhaft dargestellt. Mit dem Rotor 9 ist eine Sensoreinheit 10 verbunden, die den Lagezustand des Motors 9 und damit den Lagezustand des Rotors 14 ermittelt und einen Lage-Istwert 33 ausgibt. Dieser Lage-Istwert wird dem negativen Eingang eines Subtrahiergliedes 32 zugeführt. Das Subtrahierglied 32 erhält an seinem positiven Eingang einen Lage-Sollwert 31 von der Hauptsteuereinheit 1 (vgl. Fig. 2). Das Subtrahierglied bildet die Differenz zwischen Lage-Sollwert und Lage-Istwert und gibt das Differenzsignal an die Antriebsregeleinheit 3 aus.

In der Antriebsregeleinheit 3 erfolgt zunächst eine Lageverarbeitung 36, bei der beispielsweise geprüft wird, ob die Lagedifferenz innerhalb einer vorgegebenen Toleranz liegt. Ist dies im Ausnahmefall nicht erfüllt, kann beispielsweise über eine (nicht dargestellte) Leitung ein Auslösesignal an die Hauptsteuereinrichtung abgegeben werden. Die Hauptsteuereinrichtung kann dann ggf. die Drehzahl des "virtuellen Rotors" vermindern oder die Maschine abschalten. Ferner kann ein akustisches und/oder optisches Anzeigesignal abgegeben werden. Aus der Lagedifferenz wird anschließend in einer Einheit 37 ein Drehzahl-Sollwert 30 ermittelt und dem positiven Eingang eines weiteren Subtrahiergliedes 34 zugeführt. Dem negativen Eingang des Subtrahiergliedes 34 wird ein Drehzahl-Istwert 35 zugeführt, der aus dem Lage-Istwert über ein Differenzierglied 40 erhalten wurde. Das Subtrahierglied 34 bildet die Differenz zwischen Drehzahl-Sollwert 30 und Drehzahl-Istwert 35 und führt das so erhaltene Drehzahl-Differenzsignal einer Drehzahlverarbeitung 38 zu. Bei der Drehzahlverarbeitung 38 wird"geprüft, ob die Drehzahldifferenz innerhalb vorgegebener Grenzen liegt. Gegebenenfalls kann auch hier die Erzeugung eines Auslösesignals wiebei der Lageverarbeitung vorgesehen sein. Anschließend wird die Drehzahldifferenz in einer Einheit 39 in ein Drehzahl-Änderungssignal bzw. ein Beschleunigungssignal umgesetzt (die Beschleunigung umfaßt dabei selbstverständlich Drehzahlerhöhungen oder Drehzahlverminderungen). Das Beschleunigungssignal wird anschließend der Maschinensteuerung 4 zugeführt, die den Motor 9 entsprechend regelt. Der oben beschriebene Regelvorgang wird fortlaufend in sehr kurzen Zeitabständen durchgeführt.

Bei der oben dargestellten Ausführungsform wurde davon ausgegangen, daß die Hauptsteuereinrichtung für jede Antriebsregeleinheit einen unterschiedlichen Lagesollwert generiert und ausgibt. Da in der "idealen Maschine" die Relativlagen der Rotoren sich nicht verändern ist es aber auch möglich, allen Antriebsregeleinheiten denselben Lagesollwert zuzuführen und die (konstante) Lagedifferenz für den betroffenen Rotor in der Lageverarbeitung 36 der jeweiligen Antriebsregeleinheit zu berücksichtigen.

Mit der erfindungsgemäßen Einzelregelung der Rotoren, die unabhängig voneinander mit Bezug auf einen "virtuellen Rotor" geregelt werden, ist der Aufbau einer schnellen und genauen Synchronregelung für mehrstufige Verdrängungsmaschinen möglich.

## Patentansprüche

1. Verdrängermaschine für kompressible Medien, insbesondere eine trockenlaufende Evakuationspumpe, mit mindestens zwei Rotoren (14), die als Profilkörper ausgebildet sind und deren Profile bei der Drehung zahnradartig ineinander greifen und die berührungsfrei zueinander laufen, wobei die Rotoren (14) jeweils durch eigene Elektromotoren (9) angetrieben werden, die Motoren durch elektronische Regelungs- und/oder Steuerungseinheiten (1, 3, 10) synchron in Winkelposition und Drehzahl gesteuert und/oder geregelt werden, jedem Motor (9) eine eigene Antriebsregeleinheit (3) zugeordnet ist, die unabhängig von den Antriebsregeleinheiten anderer Motoren (9) arbeitet, von einer Hauptsteuervorrichtung (1) den Antriebsregeleinrichtungen Regelsollwerte zugeführt werden, für jeden Motor (9) eine eigene, unabhängige Einzelregelung durchgeführt wird und die Regelung auf zentral vorgegebenen Regelsollwerten basiert und dezentral erfolgt, dadurch gekennzeichnet, daß in die Regelungs- und/oder Steuerungseinheit für die Anlaufphase der Pumpenrotoren ein Anlaufimpuls-Drehmomentgeber eingebaut ist.

2. Verdrängermaschine nach Anspruch 1, dadurch gekennzeichnet, daß in die Hauptsteuereinheit (1) Überlastschutz für die Motoren und Pumpe integriert ist mit optischer und/ oder akustischer Signalgabe als Vorwarnung und anschließender automatischer Motorabschaltung oder Drehzahlreduzierung.

3. Verdrängermaschine für kompressible Medien, insbesondere eine trockenlaufende Evakuationspumpe, mit mindestens zwei Rotoren (14), die als Profilkörper ausgebildet sind und deren Profile bei der Drehung zahnradartig ineinander greifen und die berührungsfrei zueinander laufen, wobei die Rotoren (14) jeweils durch eigene Elektromotoren (9) angetrieben werden, die Motoren durch elektronische Regelungs- und/oder Steuerungseinheiten (1, 3, 10) synchron in Winkelposition und Drehzahl gesteuert und/oder geregelt werden, jedem Motor (9) eine eigene Antriebsregeleinheit (3) zugeordnet ist, die unabhängig von den Antriebsregeleinheiten anderer Motoren (9) arbeitet, von einer Hauptsteuervorrichtung (1) den Antriebsregeleinrichtungen Regelsollwerte zugeführt werden, für jeden Motor (9) eine eigene, unabhängige Einzelregelung durchgeführt wird und die Regelung auf zentral vorgegebenen Regelsollwerten basiert und dezentral erfolgt, dadurch gekennzeichnet, daß in die Hauptsteuervorrichtung (1) ein Überlastschutz für die Motoren und Pumpe integriert ist mit optischer und/ oder akustischer Signalgabe als Vorwarnung und anschließender automatischer Motorabschaltung oder Drehzahlreduzierung.

4. Verdrängermaschine nach Anspruch 3, dadurch gekennzeichnet, daß in die Regelungs- und/oder Steuerungseinheit für die Anlaufphase der Pumpenrotoren ein Anlaufimpuls-Drehmomentgeber eingebaut ist.

5. Verdrängermaschine nach einem der Ansprüche 1 bis 4,
dadurch gekennzeichnet, daß die Rotoren aus Werkstoffen bestehen bzw. die Rotoroberflächen mit Werkstoffen beschichtet sind, die gute Notlaufeigenschaften besitzen.

6. Verdrängermaschine nach einem der Ansprüche 1 bis 5,
dadurch gekennzeichnet, daß der Abstand der gegeneinander laufenden Flächen der Rotoren in Bereichen geringer Relativbewegungen gegeneinander geringer ist als in Bereichen höherer Relativbewegungen.

7. Verdrängermaschine nach einem der Ansprüche 1 bis 6,
dadurch gekennzeichnet, daß als Antriebsmotoren Normmotore mit normalem Wellenstumpf verwendet werden.

8. Verdrängermaschine nach einem der Ansprüche 1 bis 6,
dadurch gekennzeichnet, daß als Antriebsmotoren Einbaumotore in Bausatzspindelart verwendet werden.

9. Verdrängermaschine nach einem der Ansprüche 1 bis 6,
dadurch gekennzeichnet, daß als Antriebsmotoren Spaltrohrmotore verwendet werden.

10. Verdrängermaschine nach einem der Ansprüche 1 bis 9,
dadurch gekennzeichnet, daß an die Pumpe (100) Überwachungseinheiten zur Überwachung von Drehzahl, relativer Winkelposition, Laufgenauigkeit, Temperaturen, Schlupf-und Drehrichtung mit Übertragungsmöglichkeit der Daten an ein von außen zu überwachendes Anzeigegerät (17, 18) angeschlossen sind.

11. Verdrängermaschine nach einem der Ansprüche 1 bis 10,
dadurch gekennzeichnet, daß die Einstellung der jeweiligen Pumpenleistung über die vorhandene elektronische Steuerung/Regelung mittels Drehzahlvariation erfolgt.

12. Verfahren zur Regelung einer Verdrängermaschine, dadurch gekennzeichnet, daß eine Verträngermaschine nach einem der vorstehenden Ansprüche bereitgestellt wird und daß der Regelsollwert ein Lagesollwert ist, aus dem in der Einzelregelung ein Drehzahlsollwert ermittelt wird.

13. Verfahren nach Anspruch 12, dadurch gekennzeichnet, daß der Regelsollwert ein Lagesollwert ist, daß der Lagesollwert mit einem Lageistwert verglichen wird und daß ein Auslösesignal von der Antriebsregeleinheit abgegeben wird, wenn der Unterschiedsbetrag zwischen Lagesollwert und Lageistwert einen vorgegebenen Differenzwert überschreitet.

14. Verfahren nach Anspruch 13, dadurch gekennzeichnet, daß bei Erzeugung des Auslösesignals die Drehzahl der Maschine vermindert oder die Maschine abgestellt wird.

15. Verfahren nach Anspruch 13 oder 14, dadurch gekennzeichnet, daß der Differenzwert drehzahlabhängig ist.

## Claims

1. Displacement machine for compressible media, in particular an evacuation pump having a dry operation, with at least two rotors (14), which are constructed as profiled members and whereof the profiles engage one in the other in the manner of gears upon rotation and which rotate without contact with respect to each other, the rotors (14) each being driven by individual electric motors (9), the motors being controlled and/or regulated in synchronism as regards the angular position and speed by electronic regulating and/or control units (1, 3, 10), an individual drive-regulating unit (3) being associated with each motor (9), which unit (3) operates independently of the drive-regulating units of other motors (9), desired regulating values being supplied by a main control device (1) to the drive-regulating devices, a specific, independent individual regulation being carried out for each motor (9) and the regulation taking place based on centrally prescribed desired regulating values and decentrally, characterised in that a starting pulse torque pick-up is incorporated in the regulating and/or control unit for the starting phase of the pump rotors.

2. Displacement machine according to Claim 1, characterised in that integrated in the main control unit (1) is an overload protection for the motors and pump with optical and/or acoustic signal emission as an early warning and subsequent automatic stopping of the motor or reduction of speed.

3. Displacement machine for compressible media, in particular an evacuation pump having a dry operation, with at least two rotors (14), which are constructed as profiled members and whereof the profiles engage one in the other in the manner of gears upon rotation and which rotate without contact with respect to each other, the rotors (14) each being driven by individual electric motors (9), the motors being controlled and/or regulated in synchronism as regards angular position and speed by electronic regulating and/or control units (1, 3, 10), an individual drive-regulating unit (3) being associated with each motor (9), which unit operates independently of the drive-regulating units of other motors (9), desired regulating values being supplied by a main control device (1) to the drive regulating devices, a specific, independent individual regulation being carried out for each motor (9) and the regulation taking place based on centrally prescribed desired regulating values and decentrally, characterised in that integrated in the main control device (1) is an overload protection for the motors and pump with optical and/or acoustic emission of signals as an early warning and subsequent automatic switching-off of the motor or reduction of the speed.

4. Displacement machine according to Claim 3, characterised in that a starting pulse torque pick-up is incorporated in the regulating and/or control unit for the starting phase of the pump rotors.

5. Displacement machine according to one of Claims 1 to 4, characterised in that the rotors consist of materials or the rotor surfaces are coated with materials which have good antifrictional properties.

6. Displacement machine according to one of Claims 1 to 5, characterised in that the spacing of counter-rotating surfaces of the rotors in regions of low relative movements with respect to each other is less than in regions of higher relative movements.

7. Displacement machine according to one of Claims 1 to 6, characterised in that as the drive motors standard motors with a normal shaft butt are used.

8. Displacement machine according to one of Claims 1 to 6, characterised in that as the drive motors built-in motors of spindle-type construction are used.

9. Displacement machine according to one of Claims 1 to 6, characterised in that as the drive motors slotted tube motors are used.

10. Displacement machine according to one of Claims 1 to 9, characterised in that connected to the pump (100) are monitoring units for monitoring speed, relative angular position, running accuracy, temperatures, direction of slipping and rotation with the possibility of transmission of the data to an indicator (17,18) to be monitored externally.

11. Displacement machine according to one of Claims 1 to 10, characterised in that the adjustment of the respective pump output takes place by way of the existing electronic control/regulation by means of speed variation.

12. Method for regulating a displacement machine characterised in that a displacement machine according to one of the preceding Claims is made available and that the desired regulating value is a desired positional value, from which a desired speed value is ascertained in the individual regulation.

13. Method according to Claim 12, characterised in that the desired regulating value is a desired positional value, that the desired positional value is compared with an actual positional value and that an initiating signal is emitted by the drive regulating unit, if the amount of the difference between the desired positional value and the actual positional value exceeds a predetermined differential value.

14. Method according to Claim 13, characterised in that on producing the initiating signal, the speed of the machine is reduced or the machine is stopped.

15. Method according to Claim 13 or 14, characterised in that the differential value is speed-dependent.

## Revendications

1. Machine volumétrique pour des fluides compressibles, en particulier pompe à vide marchant à sec, comportant au moins deux rotors (14) qui sont réalisés sous forme de corps profilés et dont les profils, lors de la rotation, pénètrent l'un dans l'autre à la manière d'un engrenage et qui tournent sans contact entre eux, les rotors (14) étant respectivement entraînés par des moteurs électriques propres (9), les moteurs étant commandés et/ou régulés de façon synchrone, quant à leur position angulaire et à leur vitesse de rotation, par des unités électroniques de régulation et/ou de commande (1, 3, 10), tandis qu'à chaque moteur (9) est associée une unité de régulation d'entraînement propre (3), qui fonctionne indépendamment des unités de régulation d'entraînement des autres moteurs (9), des valeurs de consigne de réglage étant en outre envoyées aux unités de régulation d'entraînement par un dispositif de commande principal (1), une régulation individuelle propre, indépendante, étant effectuée pour chaque moteur (9) et la régulation se basant sur des valeurs de consigne de réglage pré-établies de façon centralisée et se faisant de façon décentralisée, caractérisée en ce qu'un générateur de couple de démarrage par impulsions est incorporé dans l'unité de régulation et/ou de commande, pour la phase de démarrage des rotors de pompe.

2. Machine volumétrique selon la revendication 1, caractérisée en ce que, dans l'unité de commande principale (1), est intégrée une protection contre les surcharges pour les moteurs et la pompe, avec émission d'un signal optique et/ou acoustique, en tant qu'alarme, et arrêt automatique consécutif du moteur ou réduction automatique consécutive de la vitesse de rotation.

3. Machine volumétrique pour des fluides compressibles, en particulier pompe à vide marchant à sec, comportant au moins deux rotors (14), qui sont réalisés sous forme de corps profilés et dont les profils, lors de la rotation, pénètrent l'un dans l'autre à la manière d'un engrenage et qui tournent sans contact entre eux, les rotors (14) étant respectivement entraînés par des moteurs électriques propres (9), les moteurs étant commandés et/ou régulés de façon synchrone, quant à leur position angulaire et à leur vitesse de rotation, par des unités électroniques de régulation et/ou de commande (1, 3, 10), tandis qu'à chaque moteur (9) est associée une unité de régulation d'entraînement propre (3), qui fonctionne indépendamment des unités de régulation d'entraînement des autres moteurs (9), des valeurs de consigne de réglage étant en outre envoyées aux unités de régulation d'entraînement par un dispositif de commande principal (1), une régulation individuelle propre, indépendante, étant effectuée pour chaque moteur (9) et la régulation se basant sur des valeurs de consigne de réglage pré-établies de façon centralisée et se faisant de façon décentralisée, caractérisée en ce que, dans le dispositif de commande principal (1), est intégrée une protection contre les surcharges pour les moteurs et la pompe, avec émission d'un signal optique et/ou acoustique, en tant qu'alarme, et arrêt automatique consécutif du moteur ou réduction automatique consécutive de la vitesse de rotation.

4. Machine volumétrique selon la revendication 3, caractérisée en ce qu'un générateur de couple de démarrage par impulsions est incorporé dans l'unité de régulation et/ ou de commande, pour la phase de démarrage des rotors de pompe.

5. Machine volumétrique selon l'une des revendications 1 à 4, caractérisée en ce que les rotors sont réalisés en des matériaux, ou les surfaces libres des rotors sont recouvertes de matériaux, qui possèdent de bonnes propriétés de fonctionnement à sec.

6. Machine volumétrique selon l'une des revendications 1 à 5, caractérisée en ce que l'écartement des surfaces, tournant l'une par rapport à l'autre, des rotors est plus petit dans des régions de faibles déplacements relatifs que dans des régions de déplacements relatifs plus élevés.

7. Machine volumétrique selon l'une des revendications 1 à 6, caractérisée en ce que des moteurs standard à bout d'arbre normalisé sont utilisés comme moteurs d'entraînement.

8. Machine volumétrique selon l'une des revendications 1 à 6, caractérisée en ce que des moteurs incorporés du type à broche en pièce détachée sont utilisés comme moteurs d'entraînement.

9. Machine volumétrique selon l'une des revendications 1 à 6, caractérisée en ce que des moteurs à gaine sont utilisés comme moteurs d'entraînement.

10. Machine volumétrique selon l'une des revendications 1 à 9, caractérisée en ce qu'à la pompe (100), sont raccordées des unités de contrôle destinées à contrôler la vitesse de rotation, la position angulaire relative, la précision de la marche, les températures, le sens du glissement et le sens de rotation, avec possibilité de transmission des données à un appareil indicateur (17, 18) qui peut être surveillé de l'extérieur.

11. Machine volumétrique selon l'une des revendications 1 à 10, caractérisée en ce que le réglage de la puissance respective de la pompe par l'intermédiaire de la commande/régulation électronique présente se fait au moyen d'une variation de vitesse de rotation.

12. Procédé de régulation d'une machine 'volumétrique, caractérisé en ce qu'une machine volumétrique selon l'une des revendications précédentes est mise à disposition et en ce que la valeur de consigne de réglage est une valeur de consigne de position, à partir de laquelle une valeur de consigne de vitesse de rotation est déterminée dans la régulation individuelle.

13. Procédé selon la revendication 12, caractérisé en ce que la valeur de consigne de réglage est une valeur de consigne de position, en ce que la valeur de consigne de position est comparée à une valeur instantanée de position et en ce qu'un signal de déclenchement est délivré par l'unité de régulation d'entraînement, quand la différence entre la valeur de consigne de position et la valeur instantanée de position dépasse une valeur différentielle prédéfinie.

14. Procédé selon la revendication 13, caractérisé en ce que lors de la production du signal de déclenchement, la vitesse de rotation de la machine est diminuée ou la machine est arrêtée.

15. Procédé selon la revendication 13 ou 14, caractérisé en ce que la valeur différentielle est fonction de la vitesse de rotation.
